# EUROPEAN PATENT APPLICATION

(11) **EP 4 769 638 A1**
(43) Date of publication of application: **01.07.2026**
(21) Application number: 25845047.7
(22) Date of filing: 10.07.2025
(51) Int. Cl.: H01M 10/42, H01M 10/48, H01M 10/04, G06Q 50/04, G01B 7/004, B65H 35/00

(54) **METHOD FOR MANUFACTURING SECONDARY BATTERY**

(30) Priority: 23.07.2024 KR 20240097177
(71) Applicant: LG Energy Solution, Ltd., Seoul 07335 (KR)
(72) Inventor: LEE, Jong Hun, Daejeon 34122 (KR); LEE, Chung Hee, Daejeon 34122 (KR); KIM, Da Woon, Daejeon 34122 (KR); HYUN, Woo Bin, Daejeon 34122 (KR); LEE, Seo Jun, Daejeon 34122 (KR)
(74) Representative: BCKIP Part mbB
(86) International application number: PCT/KR2025/010103
(87) International publication number: WO 2026/023950

(57) **Abstract**

Provided, according to example embodiments, is a method for manufacturing a secondary battery. The method comprises: a step for reading an electrode ID from a data matrix of a mono-cell including a positive electrode, a negative electrode, and a separator, and a step for determining whether the mono-cell is functional or defective on the basis of the electrode ID. wherein the electrode ID includes a symbol for identifying an electrode.

## Description

### [Technical Field]

The present disclosure relates to a method of manufacturing a secondary battery.

This application claims the benefit of priority from Korean Patent Application No. 10-2024-0097177, filed on July 23, 2024, the entire contents disclosed therein are incorporated by reference into this disclosure.

### [Background]

Unlike primary batteries, secondary batteries can be charged and discharged multiple times. Secondary batteries are widely used as energy sources for various wireless devices such as handsets, laptops, wireless vacuum cleaners, etc. Recently, due to energy density improvements and economies of scale, the manufacturing cost per unit capacity of secondary batteries has dramatically decreased, and as the cruising distance of BEVs (battery electric vehicles) has increased to a level equivalent to fuel vehicles, the primary applications of secondary batteries are shifting from mobile devices to mobility.

Secondary batteries are manufactured through an electrode process, an assembly process, and an activation process. Among them, the electrode process is the most critical process for determining the yield and performance of battery cells. The electrode process may include a coating process, a roll press process, and a slitting process. In the coating process, an active material and an insulating material may be applied on a surface of a current collector. In the roll press process, an electrode may be pressed by pressing rolls. The roll press process may determine the density and performance of the electrode and surface acceptance or rejection. In the slitting process, the electrode may be cut into a plurality of electrodes according to the design of the battery cell.

### [Summary]

### [Technical Problem]

A problem to be solved by the present disclosure is to provide a method of manufacturing a secondary battery with improved traceability.

### [Technical Solution]

According to exemplary embodiments of the present disclosure for solving the above-described problem, a method of manufacturing a secondary battery is provided. The method includes reading an electrode ID from a data matrix of a mono cell including a positive electrode, a negative electrode, and a separator; and determining acceptance or rejection of the mono cell based on the electrode ID, and the electrode ID includes a symbol for identifying an electrode.

The acceptance or rejection of the mono cell is determined based on the electrode ID and electrode ID-associated quality data, and the electrode ID-associated quality data includes the electrode ID and a quality value matched to the electrode ID.

The acceptance or rejection of the mono cell is determined by the quality value matched to the electrode ID.

The method further includes discharging the mono cell when the quality value indicates a defect.

The method further includes generating a signal for turning off vacuum of a transfer device configured to transfer the mono cell when the quality value indicates a defect.

The positive electrode includes a positive electrode tab, the negative electrode includes a negative electrode tab, and the data matrix is on one of the positive electrode tab and the negative electrode tab.

According to exemplary embodiments, a secondary battery manufacturing system is provided. The system includes notching equipment including a notching device configured to form an electrode tab on an electrode sheet, a marking device configured to form a data matrix on the electrode tab, and an inspector configured to inspect the electrode sheet; and a server configured to match the electrode ID represented by the data matrix with a quality value of the electrode sheet determined by the inspector.

The notching equipment is configured to collect coordinate-associated electrode ID data and coordinate-associated quality data, the coordinate-associated electrode ID data includes a coordinate of the electrode sheet and the electrode ID matched to the coordinate, and the coordinate-associated quality data includes the coordinate and a quality value matched to the coordinate.

The server is configured to match the electrode ID with the quality value based on the coordinate-associated electrode ID data and the coordinate-associated quality data.

The system further includes Lamination and Stacking (L&S) equipment configured to cut the electrode sheet to form an electrode including an electrode tab, and to form a mono cell using the electrode, and the L&S equipment includes an electrode ID reader configured to detect the electrode ID from the data matrix.

The server is configured to transmit electrode ID-associated quality data including the electrode ID and a quality value matched to the electrode ID to a controller of the L&S equipment.

The L&S equipment further includes a transfer device configured to transfer the mono cell, and the controller is configured to generate a signal for controlling vacuum of the transfer device based on the electrode ID-associated quality data.

### [Advantageous Effects]

According to exemplary embodiments of the present disclosure, a quality value and an electrode ID can be matched based on quality data and electrode ID data collected in a notching process. Accordingly, by reading a data matrix after forming a mono cell in an L&S process, a defective mono cell and a good quality mono cell can be distinguished.

The technical effects that can be obtained in exemplary embodiments of the present disclosure are not limited to the above-described effects, and other effects not mentioned can be clearly derived and understood by a person skilled in the art from the following description. In other words, unintended effects of implementing the exemplary embodiments of the present disclosure may also be derived from the exemplary embodiments of the present disclosure by a person skilled in the art.

### [Brief Description of the Drawings]

FIG. 1 illustrates a secondary battery manufacturing system according to exemplary embodiments.
FIG. 2 illustrates notching equipment according to exemplary embodiments.
FIG. 3 illustrates an electrode sheet processed by notching equipment.
FIG. 4 illustrates Lamination and Stacking (L&S) equipment according to exemplary embodiments.
FIG. 5 is a flowchart for explaining a method of manufacturing a secondary battery according to exemplary embodiments.

### [Best Mode For Carrying Out the Invention]

According to exemplary embodiments of the present disclosure, a method of manufacturing a secondary battery is provided. The method includes reading an electrode ID from a data matrix of a mono cell including a positive electrode, a negative electrode, and a separator; and determining acceptance or rejection of the mono cell based on the electrode ID, and the electrode ID includes a symbol for identifying an electrode.

According to exemplary embodiments of the present disclosure, a secondary battery manufacturing system is provided. The system includes notching equipment including a notching device configured to form an electrode tab on an electrode sheet, a marking device configured to form a data matrix on the electrode tab, and an inspector configured to inspect the electrode sheet; and a server configured to match the electrode ID represented by the data matrix with a quality value of the electrode sheet determined by the inspector.

### [Detailed Description]

Hereinafter, preferred embodiments of the present disclosure will be described in detail with reference to the accompanying drawings. Prior to this, the terms or words used in the present specification and claims should not be construed as being limited to conventional or dictionary meanings, and should be interpreted as meanings and concepts that conform to the technical idea of the present disclosure based on the principle that the inventors can appropriately define the concept of terms in order to describe their own invention in the best way.

Therefore, it should be understood that the embodiments described in the present specification and the configurations shown in the drawings are merely one most preferred embodiment of the present disclosure and do not represent all of the technical ideas of the present disclosure, so that various equivalents and modifications that may replace them may exist at the time of the present application.

In addition, in describing the present disclosure, when it is determined that a detailed description of a related known configuration or function may obscure the gist of the present disclosure, the detailed description thereof will be omitted.

The embodiments of the present disclosure are provided to more completely describe the present disclosure to those skilled in the art, so the shapes and sizes of components in the drawings may be exaggerated, omitted, or schematically illustrated for clearer explanation. Therefore, the size or ratio of each component does not entirely reflect the actual size or ratio.

### (First Embodiment)

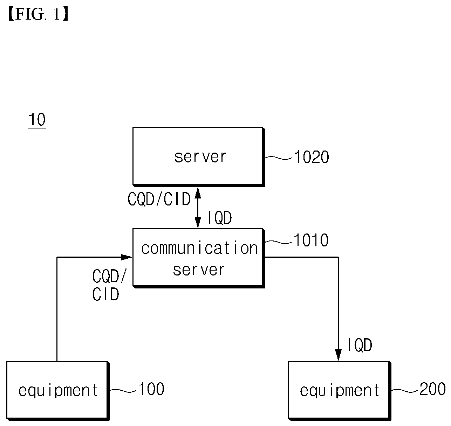

FIG. 1 illustrates a secondary battery manufacturing system 10 according to exemplary embodiments.

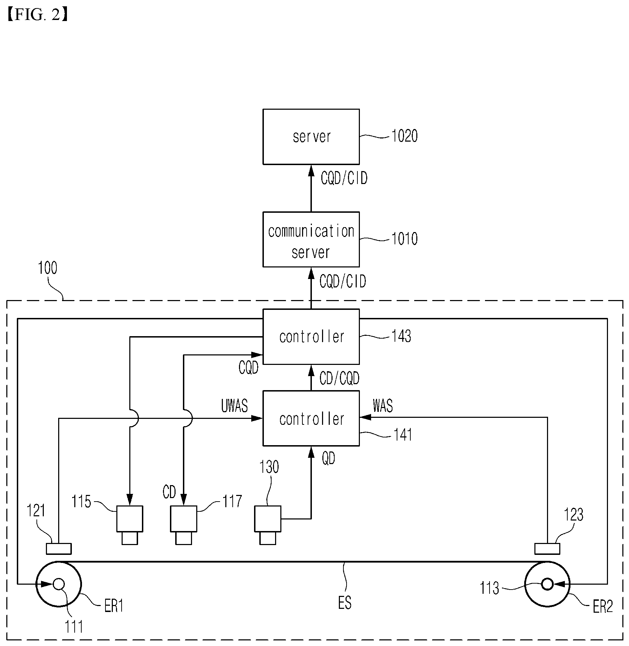

FIG. 2 illustrates notching equipment 100 according to exemplary embodiments.

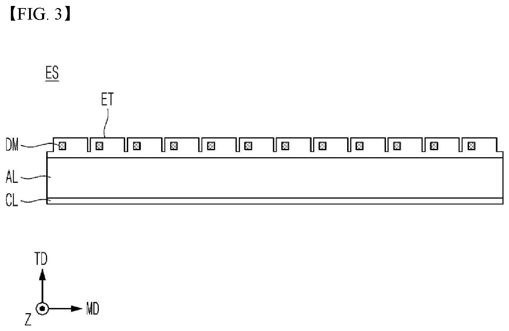

FIG. 3 illustrates an electrode sheet ES processed by notching equipment 100.

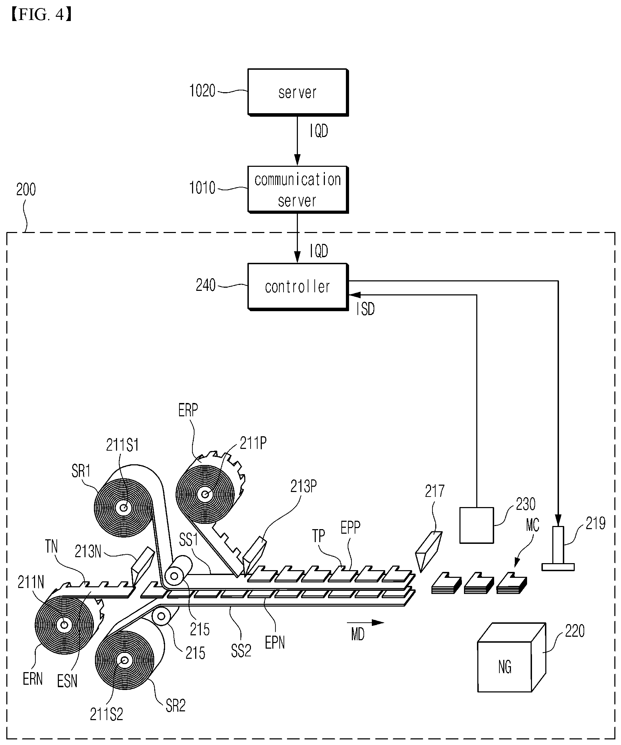

FIG. 4 illustrates Lamination and Stacking (L&S) equipment 200 according to exemplary embodiments.

Referring to FIG. 1 to FIG. 4, the secondary battery manufacturing system 10 may include notching equipment 100 and L&S equipment 200.

The notching equipment 100 may be configured to process an electrode roll ER1. The notching equipment 100 may be configured to form an electrode tab ET on an electrode sheet ES unwound from the electrode roll ER1. The notching equipment 100 may be configured to form a data matrix DM on the electrode tab ET of the electrode sheet ES. In the notching equipment 100, coordinate-associated quality data CQD and coordinate-associated electrode ID data CID may be collected. The notching equipment 100 may be configured to transmit the coordinate-associated quality data CQD and the coordinate-associated electrode ID data CID to a server 1020. The coordinate-associated quality data CQD and the coordinate-associated electrode ID data CID may be transmitted to the server 1020 via a communication server 1010.

The server 1020 may be configured to generate electrode ID-associated quality data IQD based on the coordinate-associated quality data CQD and the coordinate-associated electrode ID data CID. The server 1020 may be configured to transmit the electrode ID-associated quality data IQD to the L&S equipment.

The L&S equipment 200 may be configured to form a plurality of mono cells MC using a positive electrode roll ERP, a negative electrode roll ERN, and separator rolls SRS. The L&S equipment 200 may be configured to separate good quality products and defective products among the plurality of mono cells MC based on the electrode ID-associated quality data IQD. The L&S equipment 200 may be configured to deliver the good quality products among the plurality of mono cells MC to subsequent process equipment and discharge the defective products.

The secondary battery manufacturing system may further include coating equipment configured to perform a coating process, roll pressing equipment configured to perform a roll pressing process, and slitting equipment configured to perform a slitting process.

In the coating process, an electrode slurry may be coated on an electrode sheet. In the roll pressing process, the electrode sheet coated with the electrode slurry may be rolled. By the slitting process, the electrode sheet may be separated into a plurality of electrode sheets.

The communication server 1010 may be a device for communication between controllers of manufacturing equipment and the server 1020. A controller 143 of the notching equipment 100 and a controller 240 of the L&S equipment 200 may communicate with the server 1020 through the communication server 1010. Accordingly, data of process events occurring in the notching equipment 100 and the L&S equipment 200 may be transmitted to the server 1020. In addition, data of process events stored in the server 1020 may be transmitted to the notching equipment 100 and the L&S equipment 200.

The server 1020 may be configured to generate a roll map including data of process events. The data of process events in the roll map may include a value representing a process event and a coordinate matched to the value. The coordinate may represent a position on the electrode sheet. Accordingly, the roll map enables feedback, feed forward, and tracking of a manufacturing process of a secondary battery, which will be described later.

The roll map may include coordinate-associated measurement data and coordinate-associated inspection data generated by associating measurement data and inspection data, which are time-series data, with coordinate data. Accordingly, the roll map may provide traceability for all processes while a subsequent process is being performed or after a product is shipped.

The roll map may be generated in lot units. A lot is a production unit of a roll-to-roll process, and an electrode roll (or electrode assembly roll) separated after achieving a target winding length of each process is an example of a lot. Similarly, an electrode roll loaded on an unwinder of each process is also an example of a lot. The server 1020 may generate and store roll maps of each process (e.g., coating process, roll pressing process, or slitting process).

In the roll map, time-series data configured according to the passage of time (i.e., according to the progress of the process) may be associated with coordinate data collected based on the movement amount of the electrode sheet (i.e., any one of consumption amount and input amount).

Manufacturing of a secondary battery includes a series of different processes, and a leading process affects a following process. At this time, when time-series data of the leading process is not directly matched with a work piece, intermediate product, and product in the real world, there is difficulty in reflecting the time-series data of the leading process to the following process. Hereinafter, correction of a subsequent process based on data generated according to results of a leading process is referred to as feed forward.

Here, the work piece means an article provided as a result of each process, such as a second electrode roll ER2 completed by the notching equipment 100. An intermediate product may refer to one of separators, electrodes, and an assembly thereof (i.e., an electrode assembly) cut through a notching process. The intermediate product may be a structure including a housing and an electrode assembly embedded in the housing (in some cases, the structure further includes an electrolyte). A product means an article processed to be operable as a secondary battery through an activation process. The above-described definitions of the work piece, intermediate product, and product are for one aspect thereof and do not exclude conventional definitions thereof.

Process events are generally time-series data because they occur according to the progress of a process. Accordingly, data of process events may include a value representing an event and a time value matched thereto.

For feed forward, time-series data needs to be associated with positions on work pieces, parts, intermediate products, and products in the real world. Here, feed forward may include controlling processing of an electrode sheet based on a roll map generated in a previous process. The roll map may associate time-series data with coordinate data including coordinates representing positions on work pieces, parts, intermediate products, and products in the real world. The roll map may provide matching of time-series data with work pieces, parts, intermediate products, and products in the real world based on coordinate data. Accordingly, generation of the roll map and feed forward based on the roll map quantify and objectify aspects of processes that depended on the discretion of workers, whereby productivity and quality of a secondary battery manufacturing process may be improved.

According to exemplary embodiments, the server 1020 may be a data processing system that supports various activities necessary for managing manufacturing of secondary batteries, such as work schedule management, work instructions, quality control, and work performance aggregation. The server 1020 may be, for example, a Manufacturing Execution System (MES). The server 1020 may be configured to perform input, processing, output, and communication of data necessary for electrode manufacturing, such as a coating process, a press process, and a manufacturing process.

According to other exemplary embodiments, the server 1020 may be configured to store and process raw measurement data. The server 1020 may manage quality of processing of the electrode sheet by continuously monitoring the processing of the electrode sheet based on the measurement data. According to exemplary embodiments, the server 1020 may be a Statistical Process Controller (SPC). The server 1020 may collect and analyze manufacturing data almost in real time, thereby identifying problem conditions in a timely manner and providing an alarm to a worker before potential problems occur.

According to other exemplary embodiments, the server 1020 may be, for example, a data warehouse, and may store the roll map for a long period based on a quality assurance period of a product.

According to other exemplary embodiments, the server 1020 may perform all functions of the MES, SPC, and data warehouse, or may be provided separately from the MES, SPC, and data warehouse for creating a roll map.

The notching equipment 100 may include an unwinder 111, a rewinder 113, a notching device 115, a marking device 117, a first encoder 121, a second encoder 123, an inspector 130, a controller 141, and a controller 143.

A first electrode roll ER1 may be loaded on the unwinder 111. The unwinder 111 may be configured to unwind the electrode sheet ES from the first electrode roll ER1. The rewinder 113 may be configured to wind the electrode sheet ES into a second electrode roll ER2. Accordingly, the electrode sheet ES may move between the unwinder 111 and the rewinder 113.

The electrode sheet ES is wound into the second electrode roll ER2, and after reaching a predetermined winding length, may be cut and separated in a transverse direction (TD). The second electrode roll ER2 separated from the electrode sheet ES may be managed as a lot, which is a unit of a production process, as an article in which a coating process is completed.

The first encoder 121 may be configured to detect an amount of the electrode sheet ES unwound from the first electrode roll ER1 by the unwinder 111. Accordingly, the first encoder 121 may be configured to generate an input amount signal UWAS representing a length of the electrode sheet ES unwound by the unwinder 111. The first encoder 121 may be configured to transmit the input amount signal UWAS to the controller 141.

The second encoder 123 may be configured to detect the amount of the electrode sheet ES wound into the second electrode roll ER2 by the rewinder 113. Accordingly, the second encoder 123 may be configured to generate a consumption amount signal WAS representing a length of the electrode sheet ES wound by the rewinder 113. The second encoder 123 may be configured to transmit the consumption amount signal WAS to the controller 141.

The electrode sheet ES may include a current collector CL and an active material layer AL. The current collector CL may not cause a chemical change in a finally manufactured secondary battery and may have high conductivity. A surface of the current collector CL may include a fine concavo-convex structure for increasing adhesion of an active material. A shape of the current collector CL may include any one of a film, a sheet, a foil, a net, a porous body, a foam, and a nonwoven fabric.

The current collector CL for a positive electrode may include any one of stainless steel, aluminum, nickel, titanium, fired carbon, and aluminum. The current collector CL for a negative electrode may include any one of copper, stainless steel, aluminum, nickel, titanium, fired carbon, and an aluminum-cadmium alloy.

The active material layer AL may include a positive electrode active material or a negative electrode active material. The positive electrode active material is a material capable of causing an electrochemical reaction. The positive electrode active material may be a lithium transition metal oxide. The positive electrode active material may include, for example, layered compounds such as lithium cobalt oxide (LiCoO₂) and lithium nickel oxide (LiNiO₂) substituted with one or more transition metals; lithium manganese oxide substituted with one or more transition metals; lithium nickel-based oxide represented by the formula LiNi_{1-y}M_{y}O₂ (wherein M is any one of Co, Mn, Al, Cu, Fe, Mg, B, Cr, Zn, and Ga, and 0.01≤y≤0.7); lithium nickel cobalt manganese composite oxide represented by Li_{1+z}Ni_{b}Mn_{c}Co_{1-(b+c+d)}M_{d}O₍₂₋ₑ₎Aₑ such as Li_{1+z}Ni_{1/3}Co_{1/3}Mn_{1/3}O₂, Li_{1+zN}i_{0.4}Mn_{0.4}Co_{0.2}O₂ (wherein -0.5≤z≤0.5, 0.1≤b≤0.8, 0.1≤c≤0.8, 0≤d≤0.2, 0≤e≤0.2, b+c+d<1, M is any one of Al, Mg, Cr, Ti, Si, and Y, and A is any one of F, P, and Cl); and olivine-based lithium metal phosphate represented by the formula Li₁₊ₓM_{1-y}M'_{y}PO_{4-z}X_{z} (wherein M is a transition metal, more specifically any one of Fe, Mn, Co, and Ni, M' is any one of Al, Mg, and Ti, X is any one of F, S, and N, -0.5≤x≤+0.5, 0≤y≤0.5, and 0≤z≤0.1).

The negative electrode active material may include, for example, carbon such as non-graphitizable carbon and graphite-based carbon. The negative electrode active material may include, for example, metal composite oxides such as LiₓFe₂O₃ (0≤x≤1), LiₓWO₂ (0≤x≤1), SnₓMe₁₋ₓMe'_{y}O_{z} (wherein Me is any one of Mn, Fe, Pb, and Ge, Me' is any one of Al, B, P, Si, Group 1, Group 2, Group 3 elements of the periodic table, and halogens; 0<x≤1; 1≤y≤3; and 1≤z≤8). The negative electrode active material may include, for example, any one of lithium metal; lithium alloys; silicon-based alloys; and tin-based alloys. The negative electrode active material may include, for example, metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅. The negative electrode active material may also include, for example, conductive polymers such as polyacetylene; Li-Co-Ni-based materials, and the like.

The notching device 115 may be configured to form the electrode tab ET on an uncoated portion of the electrode sheet ES. The electrode tab ET may be formed by partial cutting of the uncoated portion of the electrode sheet ES. The notching device 115 may be a laser notcher, but is not limited thereto. The notching device 115 may also include mechanical notching means such as a notching knife.

A portion of the current collector CL to which the active material layer AL is applied may be referred to as a coated portion, and a portion of the current collector CL to which the active material layer AL is not applied (i.e., a portion of the current collector CL spaced apart from the active material layer AL) may be referred to as an uncoated portion.

The marking device 117 may be configured to form the data matrix DM. The data matrix DM may be formed on the electrode tab ET. The marking device 117 may be any one of a laser printer and an inkjet printer.

The data matrix DM may be, for example, a two-dimensional barcode. The data matrix DM may include information about an electrode ID. In other words, the electrode ID may be read from the data matrix DM. The electrode ID may be used for identification of the electrode tab ET. The electrode ID may include symbols representing a place where the notching equipment 100 is installed, a time when the electrode tab ET is formed, and a lot number of the electrode roll ER2.

Data of an operation of the marking device 117, that is, coordinate-associated electrode ID data CID, may be transmitted to the controller 143. The coordinate-associated electrode ID data CID may include the electrode ID and a coordinate matched to the electrode ID.

The controller 141 may be configured to collect coordinate data CD of the electrode sheet ES based on the consumption amount signal WAS and/or the input amount signal UWAS of the electrode sheet ES. As an example, the controller 141 may determine a movement distance of the electrode sheet ES based on the consumption amount signal WAS of the electrode sheet ES. Accordingly, the controller 141 may be configured to determine a position within the electrode sheet ES of a portion of the electrode sheet ES wound by the rewinder 113 at each time point when an event occurs on the electrode sheet ES.

As another example, the controller 141 may determine the movement distance of the electrode sheet ES based on the input amount signal UWAS of the electrode sheet ES, or may determine the movement distance of the electrode sheet ES based on each of the consumption amount signal WAS and the input amount signal UWAS. Hereinafter, as a non-limiting example, the technical concept of the present disclosure is described with reference to an embodiment in which the controller 141 collects the coordinate data CD based on the consumption amount signal WAS of the electrode sheet ES.

The coordinate data CD may include coordinates matched to each portion of the electrode sheet ES. In other words, each of arbitrary points on the electrode sheet ES may be matched with a corresponding coordinate. The coordinate may be a one-dimensional quantity in a machine direction (MD) (or a length direction of the electrode sheet ES) of the electrode sheet ES, but is not limited thereto. The coordinate may be a two-dimensional quantity in the machine direction MD of the electrode sheet ES and a Y direction of the transverse direction TD of the electrode sheet ES.

According to exemplary embodiments, the marking device 117 may operate on the coordinate data CD. According to exemplary embodiments, the marking device 117 may be configured to calibrate coordinates of the coordinate data CD based on an offset length of the marking device 117, and to form the data matrix DM on the electrode tab ET based on the calibrated coordinates. Here, the offset length of the marking device 117 may be a length of the electrode sheet ES between a portion of the electrode sheet ES detected by the second encoder 123 and a portion of the electrode sheet ES processed by the marking device 117. The marking device 117 may be configured to transmit data of an operation of the marking device 117 (data of formation of the data matrix DM) to the controller 143.

The inspector 130 may include a Time Delay and Integration (TDI) camera, a Complementary Metal Oxide Semiconductor (CMOS) image sensor, a Time of Flight (TOF) sensor, and the like. The inspector 130 may include an emitter and a receiver configured to perform measurement using non-destructive signals such as ultrasonic waves, microwaves, terahertz waves, and infrared rays. The inspector 130 may include analog and/or digital sensors such as bio sensors, chemical sensors, composition sensors, current and/or power meters, air quality sensors, gas sensors, Hall effect sensors, brightness level sensors, and optical sensors. The inspector 130 may include pressure sensors, temperature sensors, ultrasonic sensors, proximity sensors, door state sensors, motion tracking sensors, humidity sensors, visible light and infrared sensors, cameras, and the like.

The inspector 130 may be configured to collect quality data QD. The inspector 130 may be configured to transmit the quality data QD to the controller 141. The quality data QD may include a quality value determined from inspection data and measurement data of the electrode sheet ES. The quality value may indicate whether a portion of the electrode sheet ES is defective or a good quality product.

The measurement data may include a plurality of measurement values expressed as numerical values. For example, the measurement data may include dimension data of the electrode sheet ES such as thickness and width, loading amount data of a coating material on the electrode sheet ES, dimension data such as a width of an insulating material provided on the coating material and an overlap width between the coating material and the insulating material, mismatching data between coated portion lanes on an upper surface of the electrode sheet ES and coated portion lanes on a lower surface of the electrode sheet ES, and the like. Here, the loading amount represents an amount of the coating material loaded per unit area of the electrode sheet ES and may be an areal density of the coating material.

By processing the measurement data in a set manner, the quality value of a measured portion of the electrode sheet ES may be determined. When a measured amount of the coating material on the electrode sheet ES (e.g., the loading amount on the electrode sheet ES or the thickness of the electrode sheet ES) is within a set range including an upper limit and a lower limit, a corresponding portion of the electrode sheet ES may be determined as a good quality product. When the measured amount of the coating material on the electrode sheet ES (e.g., the loading amount on the electrode sheet ES or the thickness of the electrode sheet ES) is smaller than the lower limit or larger than the upper limit, a corresponding portion of the electrode sheet ES may be determined as defective.

The inspection data may include a quality value and a process event of a portion of the electrode sheet ES. For example, the inspection data may include data of an appearance of the electrode sheet ES collected by an image-based inspection device such as a vision machine, data of disconnection and seams of the electrode sheet ES, data of a portion of the electrode sheet ES on which sampling inspection is performed, data of a portion of the electrode sheet ES scheduled to be scrapped, data of a scrapped portion of the electrode sheet ES, data on acceptance or rejection of the coating material and insulating material on the electrode sheet ES, data of reference points indicating positions of the electrode sheet ES, and defect data such as pinhole defects, crater defects, line defects, crack defects, side ring defects, island defects, folding defects, wrinkle defects, dent defects, and stamp defects. The inspector may be any one of a color sensor, a seam sensor, a reference point sensor, and a vision machine.

The above-described measurement data and inspection data may be time-series data. The measurement data and inspection data may be temporally aligned. Temporal ordering is a main characteristic of time-series data, and constitutes events in the order in which they occur and arrive for processing. In other words, the measurement data and inspection data may be stored based on a time point when measurement and inspection are performed, and the measurement data and inspection data may be associated with time. Accordingly, each of measurement values of the measurement data may be matched to time, and each of inspection values of the inspection data may be matched to time.

The controller 141 may be configured to generate coordinate-associated quality data CQD based on the quality data QD and the coordinate data CD. The coordinate-associated quality data CQD may include a determination on acceptance or rejection of a portion of the electrode sheet ES and a coordinate matched to the determination. The controller 141 may be configured to transmit the coordinate-associated quality data CQD to the controller 143.

The controller 143 may be configured to control various operational elements of the notching equipment 100. For example, the controller 143 may be configured to control the unwinder 111, the rewinder 113, the notching device 115, and the marking device 117. The controller 143 may be configured to generate a signal for controlling the notching device 115 and the marking device 117 based on a recipe transmitted from the server 1020.

The controller 143 may be configured to collect the coordinate-associated electrode ID data CID based on operation data of the marking device 117. The coordinate-associated electrode ID data CID may also be collected by the controller 141. The controller 143 may be configured to transmit the coordinate-associated electrode ID data CID and the coordinate-associated quality data CQD to the server 1020. The coordinate-associated electrode ID data CID and the coordinate-associated quality data CQD may be transmitted to the communication server 1010 through the communication server 1010.

The L&S equipment 200 may include a positive electrode unwinder 211P, a negative electrode unwinder 211N, separator unwinders 211S1, 211S2, electrode cutters 213P, 213N, guide rolls 215, a separator cutter 217, a transfer device 219, a data matrix reader 230, and a controller 240.

The L&S equipment 200 may be configured to perform, for example, a lamination and stacking process. As a result of the lamination process, mono cells MC may be provided. Each of the mono cells MC may include a positive electrode EPP, a negative electrode EPN, and separators. In the stacking process, the mono cells MC and additional half cells may be stacked in a vertical direction, and accordingly an electrode assembly may be provided.

The unwinders 211P, 211N, 211S1, 211S2 may be configured to input roll-type materials into the L&S equipment 200. More specifically, the unwinder 211P may be configured to unwind a positive electrode sheet ESP from the positive electrode roll ERP, the unwinder 211N may be configured to unwind a negative electrode sheet ESN from the negative electrode roll ERN, and the unwinders 211S1, 211S2 may be configured to unwind separator sheets SS1, SS2 from the separator rolls SR1, SR2.

The positive electrode roll ERP and the negative electrode roll ERN may be provided by the notching equipment 100 of FIG. 2. Accordingly, each of positive electrode tabs TP of the positive electrode sheet ESP unwound from the positive electrode roll ERP may include the data matrix DM, and each of negative electrode tabs TN of the negative electrode sheet ESN unwound from the negative electrode roll ERN may include the data matrix DM.

The positive electrode cutter 213P may be configured to cut the positive electrode sheet ESP. A plurality of positive electrodes EPP may be provided by cutting the positive electrode sheet ESP. The negative electrode cutter 213N may be configured to cut the negative electrode sheet ESN. A plurality of negative electrodes EPN may be provided by cutting the negative electrode sheet ESN.

The controller 240 may control operations of the positive electrode cutter 213P and the negative electrode cutter 213N as described below, and accordingly may be configured to count cuts of the positive electrode sheet ESP by the positive electrode cutter 213P and cuts of the negative electrode sheet ESN by the negative electrode cutter 213N.

The guide rolls 215 may be configured to define paths of the separator sheets SS1, SS2. The separator sheets SS1, SS2 may be aligned side by side by the guide rolls 215. The positive electrodes EPP and the negative electrodes EPN may be placed on the separator sheets SS1, SS2. For example, the negative electrodes EPN may be placed on the separator sheet SS2, and the positive electrodes EPP may be placed on the separator sheet SS1. The positive electrodes EPP and the negative electrodes EPN may be electrically and physically separated by the separator sheet SS1.

The separator cutter 217 may be configured to cut the separator sheets SS1, SS2. A stacked structure of the separator sheets SS1, SS2, the positive electrodes EPP, and the negative electrodes EPN before cutting of the separator sheets SS1, SS2 by the separator cutter 217 may be pressed by a nip roll (not shown) or the like. By cutting the separator sheets SS1, SS2, the mono cell MC including the positive electrodes EPP, the negative electrodes EPN, and separators may be provided.

The transfer device 219 may be configured to transfer the mono cell MC to subsequent process equipment such as, for example, stacking equipment. The transfer device 219 may include a gripper configured to grip the mono cell MC using vacuum pressure, but is not limited thereto.

The electrode ID reader 230 may be configured to detect the data matrix DM. The electrode ID reader 230 may be configured to read the electrode ID represented by the data matrix DM. The electrode ID reader 230 may include, for example, a Bar Code Reader (BCR), but is not limited thereto. The electrode ID reader 230 may include an Optical Character Reader (OCR).

The electrode ID reader 230 may include a camera configured to photograph an image including the data matrix DM and a processor configured to process the image. The electrode ID reader 230 may be configured to generate an electrode ID detection signal ISD based on detection of the data matrix DM. The electrode ID reader 230 may be configured to transmit the electrode ID detection signal ISD to the controller 240.

The controller 240 may be configured to control elements of the L&S equipment 200, such as, for example, the unwinders 211P, 211N, 211S1, 211S2, the positive electrode cutter 213P, the negative electrode cutter 213N, the separator cutter 217, and the transfer device 219.

The controller 240 may be configured to receive the electrode ID-associated quality data IQD transmitted from the server 1020 and the electrode ID data ISD transmitted from the data matrix reader 230. The controller 240 may be configured to generate a signal for controlling an operation of the transfer device 219 based on the electrode ID-associated quality data IQD transmitted from the server 1020 and the electrode ID data ISD.

The electrode ID-associated quality data IQD may include the electrode ID and a quality value matched to the electrode ID (more specifically, a quality value of the positive electrode EPP and/or the negative electrode EPN). According to exemplary embodiments, the controller 240 may be configured to determine a defect. A determination on a defect of the mono cell MC may be determined based on comparison of the electrode ID of the electrode ID data ISD with the electrode ID of the electrode ID-associated quality data IQD.

When the electrode ID read from the data matrix DM of the positive electrode EPP and/or the negative electrode EPN is matched with a quality value that is defective, the controller 240 may be configured to generate a control signal for discharging the defective positive electrode EPP and/or negative electrode EPN. When the electrode ID read from the data matrix DM of the positive electrode EPP and/or the negative electrode EPN is matched with a quality value that is defective, the controller 240 may be configured to generate a signal for turning off vacuum of the transfer device 219.

When the electrode ID read from the data matrix DM of the positive electrode EPP and/or the negative electrode EPN is matched with a quality value that is defective, the mono cell MC may not be transferred to a subsequent process. When the electrode ID read from the data matrix DM of the positive electrode EPP and/or the negative electrode EPN is matched with a quality value that is defective, the mono cell MC may be discharged to an NG box 220.

The controllers 141, 143, 240 may be, for example, Programmable Logic Controllers (PLCs). A PLC is a special type of microprocessor-based controller that uses programmable memory to store instructions and implements functions such as logic, sequencing, timing, counting, and arithmetic to control machines and processes. PLCs are easy to operate and program. The controller 141 may also be a PLC, but is not limited thereto.

The communication server 1010 and the server 1020 may be implemented in hardware, firmware, software, and combinations thereof. For example, the communication server 1010 and the server 1020 may include computing devices such as workstation computers, desktop computers, laptop computers, and tablet computers. The communication server 1010 and the server 1020 may include any one of simple controllers, complex processors such as microprocessors, CPUs, and GPUs, processors configured by software, dedicated hardware, and firmware. The communication server 1010 and the server 1020 may be implemented, for example, by general-purpose computers or application-specific hardware such as Digital Signal Processors (DSPs), Field Programmable Gate Arrays (FPGAs), and Application Specific Integrated Circuits (ASICs).

The server 1020 may include a physical server or a cloud server. The server 1020 may provide data and analysis results to workers through various frameworks. The framework may include a protocol supporting data transmission so that a display device 1030 may visualize data through a user interface and provide updated visualization when new data is calculated by the server 1020. The protocol supporting the data transmission may use HTML, JavaScript, and/or JSON.

The server 1020 may include various Application Programming Interfaces (APIs) for storing data in databases and other data management tools. The APIs may also be used for retrieving data from databases of various data management systems. The data management system may provide access to databases, pull data from databases, retrieve data, and generate metrics. Here, metrics are tools for visualizing data. Metrics include measurement values generated in a time series and may be used for monitoring applications and generating status alerts.

The secondary battery manufacturing system 10 may implement a plug-in architecture together with APIs for data acquisition to provide plug-and-play connection of sensors, measuring instruments, and inspectors. Accordingly, resources at a specific process step and a specific site may be easily relocated to other processes and other sites, or new resources may be easily introduced to each process step and site.

In some embodiments, the secondary battery manufacturing system 10 may further include a manual input system that allows workers to input manufacturing data. The secondary battery manufacturing system 10 may allow workers to input data using input tools and computer-based input of manufacturing data such as Excel file scraping. The manual input system may be, for example, Human-Machine Interfaces (HMI) of Supervisory Control And Data Acquisition (SCADA). SCADA may generally include a combination of software and hardware such as PLCs and Remote Terminal Units (RTUs). HMI is a main element of a SCADA system as a screen supporting communication between an operator and the SCADA system. For example, manual input by HMI may include selection of a defect type and reflection of results upon completion.

### (Second Embodiment)

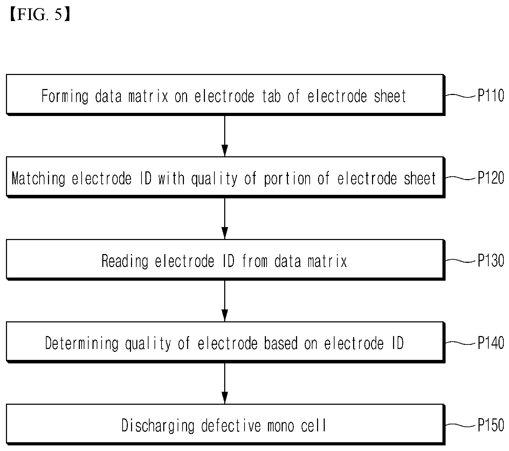

FIG. 5 is a flowchart for explaining a method of manufacturing a secondary battery according to exemplary embodiments.

Referring to FIG. 1 to FIG. 5, in P110, a data matrix DM may be formed on an electrode tab ET of an electrode sheet ES. The electrode tab ET may be formed by a notching device 115, and the data matrix DM may be formed by a marking device.

Subsequently, in P120, an electrode ID and a quality value of a portion of the electrode sheet ES may be matched. The matching of the electrode ID with the quality value of the portion of the electrode sheet ES may be based on a coordinate and may be performed by a server 1020. Electrode ID-associated quality data IQD may be generated by the matching of the electrode ID with the quality value of the portion of the electrode sheet ES.

Subsequently, in P130, the electrode ID may be read from the data matrix DM. A data matrix reader 230 may be configured to detect the data matrix DM and read the electrode ID from the data matrix DM.

Subsequently, in P140, acceptance or rejection of a mono cell MC may be determined based on the electrode ID. The acceptance or rejection of the mono cell MC may be determined by a controller 240. The determination of the acceptance or rejection of the mono cell MC may include retrieving a quality value matched to an electrode ID of a positive electrode EPP of the mono cell MC and a quality value matched to an electrode ID of a negative electrode EPN from the electrode ID-associated quality data IQD.

When a value indicating a defect is matched to at least one of the electrode ID of the positive electrode EPP of the mono cell MC and the electrode ID of the negative electrode EPN, the mono cell MC may be determined as defective. When a value indicating a good quality product is matched to each of the electrode ID of the positive electrode EPP of the mono cell MC and the electrode ID of the negative electrode EPN, the mono cell MC may be determined as a good quality product.

Subsequently, in P150, the defective mono cell MC may be discharged to an NG box 220. For discharging the defective mono cell MC, the controller 240 may be configured to generate a signal for turning off vacuum of a transfer device 219.

As described above, the present disclosure has been described in more detail through drawings and embodiments. However, it should be understood that the configurations described in the drawings or the embodiments described in the present specification are merely one embodiment of the present disclosure and do not represent all of the technical ideas of the present disclosure, so various equivalents and modifications may exist that can substitute for these at the time of filing the present application.

## Claims

1. A method of manufacturing a secondary battery, comprising:
reading an electrode ID from a data matrix of a mono cell comprising a positive electrode, a negative electrode, and a separator; and
determining acceptance or rejection of the mono cell based on the electrode ID;
wherein the electrode ID comprises a symbol for identifying an electrode.

2. The method of manufacturing a secondary battery of claim 1, wherein the acceptance or rejection of the mono cell is determined based on the electrode ID and electrode ID-associated quality data, and
wherein the electrode ID-associated quality data comprises the electrode ID and a quality value matched to the electrode ID.

3. The method of manufacturing a secondary battery of claim 2, wherein the acceptance or rejection of the mono cell is determined by the quality value matched to the electrode ID.

4. The method of manufacturing a secondary battery of claim 3, further comprising discharging the mono cell when the quality value indicates a defect.

5. The method of manufacturing a secondary battery of claim 4, further comprising generating a signal for turning off vacuum of a transfer device configured to transfer the mono cell when the quality value indicates a defect.

6. The method of manufacturing a secondary battery of claim 1, wherein the positive electrode comprises a positive electrode tab, the negative electrode comprises a negative electrode tab, and
wherein the data matrix is on any one of the positive electrode tab and the negative electrode tab.

7. A secondary battery manufacturing system, comprising:
notching equipment comprising a notching device configured to form an electrode tab on an electrode sheet, a marking device configured to form a data matrix on the electrode tab, and an inspector configured to inspect the electrode sheet; and
a server configured to match an electrode ID represented by the data matrix with a quality value of the electrode sheet determined by the inspector.

8. The secondary battery manufacturing system of claim 7, wherein the notching equipment is configured to collect coordinate-associated electrode ID data and coordinate-associated quality data,
wherein the coordinate-associated electrode ID data comprises a coordinate of the electrode sheet and the electrode ID matched to the coordinate, and
wherein the coordinate-associated quality data comprises the coordinate and a quality value matched to the coordinate.

9. The secondary battery manufacturing system of claim 8, wherein the server is configured to match the electrode ID with the quality value based on the coordinate-associated electrode ID data and the coordinate-associated quality data.

10. The secondary battery manufacturing system of claim 7, further comprising Lamination and Stacking (L&S) equipment configured to cut the electrode sheet to form an electrode including an electrode tab, and to form a mono cell using the electrode, and
wherein the L&S equipment comprises an electrode ID reader configured to detect the electrode ID from the data matrix.

11. The secondary battery manufacturing system of claim 10, wherein the server is configured to transmit electrode ID-associated quality data comprising the electrode ID and a quality value matched to the electrode ID to a controller of the L&S equipment.

12. The secondary battery manufacturing system of claim 11, wherein the L&S equipment further comprises a transfer device configured to transfer the mono cell, and
wherein the controller is configured to generate a signal for controlling vacuum of the transfer device based on the electrode ID-associated quality data.
